# EUROPEAN PATENT APPLICATION

(11) **EP 4 790 611 A1**
(43) Date of publication of application: **12.08.2026**
(21) Application number: 26155812.6
(22) Date of filing: 02.02.2026
(51) Int. Cl.: G06Q 10/06, G06F 16/25, G06F 8/34

(54) **TRANSFORMATION SEQUENCE MANAGEMENT**

(30) Priority: 10.02.2025 US 202519049413
(71) Applicant: Capital One Services, LLC, McLean, Virginia 22102 (US)
(72) Inventor: CHAUHAN, Ayushi, Brunswick (US); KHADKA, Amrit, Henrico (US); KAMALAPURI, Mukthi, Glen Allen (US); ASOK, Saji, Brambleton (US)
(74) Representative: Boult Wade Tennant LLP

(57) **Abstract**

In some implementations, a system may obtain, based on a graphical user interface (GUI) that includes a first field identifying a plurality of transformation objects, first input that indicates selection of a transformation object of the plurality of transformation objects. The system may obtain, based on a set of one or more second fields of the GUI that are associated with identifying parameter information associated with the transformation object, second input that indicates one or more parameters associated with the transformation object. The system may generate a transformation data structure, to be processed in a transformation sequence, that indicates the transformation object and the one or more parameters associated with the transformation object.

## Description

### BACKGROUND

Systems can use data from multiple sources to enable automatic and/or assisted system management. Systems can include a configuration that defines how such data can be obtained and transformed, which can enable causing one or more actions to occur using the data.

### SUMMARY

In some implementations, a system for transformation sequence management includes one or more memories; and one or more processors, communicatively coupled to the one or more memories, configured to: provide, for display, a graphical user interface (GUI) associated with transformation sequence management, wherein the GUI includes a first field identifying a plurality of transformation objects; obtain, based on providing the GUI, first input that indicates selection of a transformation object of the plurality of transformation objects; provide, for display within the GUI and based on obtaining the selection of the transformation object, a set of one or more second fields associated with identifying parameter information associated with the transformation object; obtain, based on providing the set of one or more second fields, second input that indicates one or more parameters associated with the transformation object; and generate a transformation data structure that indicates the transformation object and the one or more parameters associated with the transformation object, wherein the transformation data structure is to be processed in a transformation sequence.

In some implementations, a non-transitory computer-readable medium storing a set of instructions includes one or more instructions that, when executed by one or more processors of a system, cause the system to: obtain, based on providing a GUI that includes a first field identifying a plurality of transformation objects, first input that indicates selection of a transformation object of the plurality of transformation objects; provide, for display within the GUI and based on obtaining the selection of the transformation object, a set of one or more second fields associated with identifying parameter information associated with the transformation object; obtain, based on providing the set of one or more second fields, second input that indicates one or more parameters associated with the transformation object; and generate a transformation data structure that indicates the transformation object and the one or more parameters associated with the transformation object, wherein the transformation data structure is to be processed in a transformation sequence.

In some implementations, a method includes obtaining, by a system and based on a GUI that includes a first field identifying a plurality of transformation objects, first input that indicates selection of a transformation object of the plurality of transformation objects; obtaining, by the system and based on a set of one or more second fields of the GUI that are associated with identifying parameter information associated with the transformation object, second input that indicates one or more parameters associated with the transformation object; and generating, by the system, a transformation data structure, to be processed in a transformation sequence, that indicates the transformation object and the one or more parameters associated with the transformation object.

### BRIEF DESCRIPTION OF THE DRAWINGS

Figs. 1A through 1C are diagrams of an example associated with transformation sequence management, in accordance with some embodiments of the present disclosure.
Fig. 2 is a diagram of an example environment in which systems and/or methods described herein may be implemented, in accordance with some embodiments of the present disclosure.
Fig. 3 is a diagram of example components of a device associated with transformation sequence management, in accordance with some embodiments of the present disclosure.
Fig. 4 is a flowchart of an example process associated with transformation sequence management, in accordance with some embodiments of the present disclosure.

### DETAILED DESCRIPTION

The following detailed description of example implementations refers to the accompanying drawings. The same reference numbers in different drawings may identify the same or similar elements.

Systems, such as orchestrators, can assist in management of processes, including application deployment and management. For example, an orchestrator can assist a cloud service provider in managing computational resources, system memory, storage, network bandwidth, monitoring services, configurations, and/or application programming interfaces (APIs), among other examples, such as for a cloud-deployed application. In such an example, the orchestrator can retrieve and process data from multiple sources. For example, the orchestrator can retrieve resource-related data associated with the application, such as central processing unit (CPU) usage, memory allocation, and/or network bandwidth, among other examples. The orchestrator can perform multiple transformations on the data to support managing the application. These transformations may include normalizing different data formats, filtering data by relevance, aggregating data, sorting data, and/or modifying data types. By performing these transformations, the orchestrator can enable the efficient and automated management of application resources to improve application performance, meet service level agreements (SLAs), and/or configure resource usage to be within resource usage budgets.

However, configuring such transformation sequences can be a resource intensive process that uses a specific sequencing of transformations to ensure that an adequate output for application management is obtained. Further, because transformations can often be represented in non-user-friendly code, or another technical representation, comprehending relations of individual transformations can be difficult. Therefore, incorrect sequencing of the transformations can be likely, which can lead to execution error. This then increases the use of computing resources (e.g., processing resources, memory resources, communication resources, and/or power resources, among other examples) to identify and address the cause(s) of the execution error.

Some implementations described herein enable transformation sequence management. For example, some implementations include a transformation sequence management system that provides, for display (e.g., display on a user device) a graphical user interface (GUI). The transformation sequence management system may further provide, for display within the GUI, a first field identifying a plurality of transformation objects. A transformation object may include a transformation to be performed on data, such as data to be used as part of an orchestrator. The transformation sequence management system may obtain (e.g., from the user device via the GUI) first input that indicates a selection of a transformation object of the plurality of transformation objects.

The transformation sequence management system may provide, for display within the GUI, a set of one or more second fields that indicate parameter information associated with the selected transformation object. For example, the parameter information may be used to request input from the user to identify one or more parameters associated with the selected transformation object. The transformation sequence management system may obtain (e.g., from the user device via the GUI) second input that indicates the user-selected identification of the one or more parameters.

The transformation sequence management system may generate a transformation data structure that includes the selected transformation object and one or more associated parameters. A transformation data structure may be an object in a domain specification language, such as a JavaScript Object Notation (JSON). For example, the transformation data structure may include a first portion (e.g., one or more entries, such as one or more key-value pairs) that indicates the selected transformation object. The transformation data structure may further include a second portion that indicates the selected one or more parameters. In some cases, the transformation sequence management system may generate a transformation sequence (e.g., a sequence indicating an order of processing of transformation data structures) that includes the transformation data structure. Alternatively, the transformation sequence management system may add the transformation data structure to a transformation sequence. In some examples, the transformation sequence management system creates additional transformation data structures based on additional input via the GUI, as further described herein. The transformation sequence management system may add the additional transformation data structures to the transformation sequence.

The transformation sequence may be used as a configuration for an orchestrator, which may support performing a sequence of transformations on data to be used with the orchestrator. For example, the transformation sequence management system may cause the transformation data structure to be processed in the transformation sequence, such as by causing another system (e.g., a server) to perform the transformation sequence. Performing a transformation sequence may include processing one or more transformation data structures of the transformation sequence in the order indicated by the transformation sequence.

In this way, implementations described herein enable improved creation and modification of transformation sequences. For example, by including both the transformation object and the one or more associated parameters in the transformation data structure, the transformation sequence management system enables the transformation data structure to be accurately replicated across different environments, which increases consistency and reliability within data processing pipelines. Further, by using a domain-specific language to define a transformation data object, the transformation sequence management system reduces the complexity of managing and executing transformations, which enables users to define and perform transformations without advanced knowledge of underlying codebases or algorithms. This reduces the amount of time a user spends creating the transformation sequence, which conserves computing resources (e.g., processing resources, memory resources, communication resources, and/or power resources, among other examples) that the user would otherwise use to create the transformation sequence. Moreover, implementations described herein enforce uniformity and consistency in computer code deployments for creating transformation sequences, which reduces likelihoods of computer code defects and the need for testing and debugging of computer code.

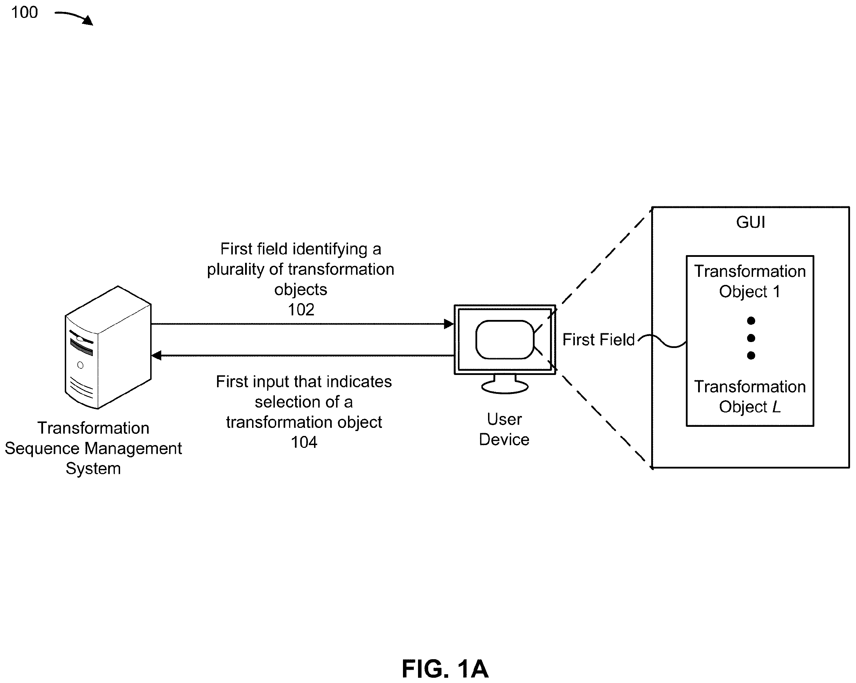

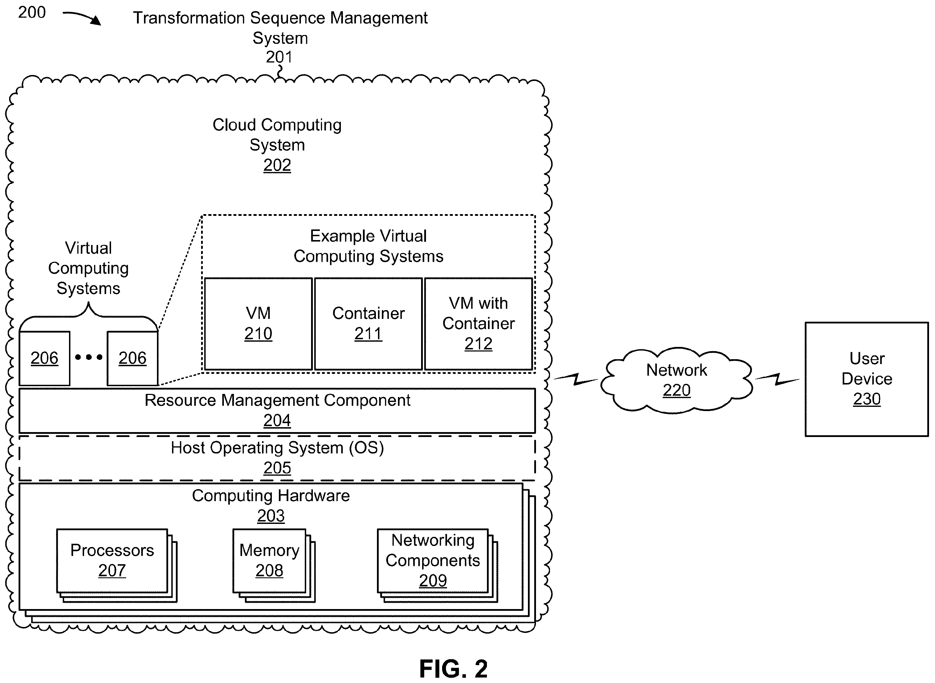

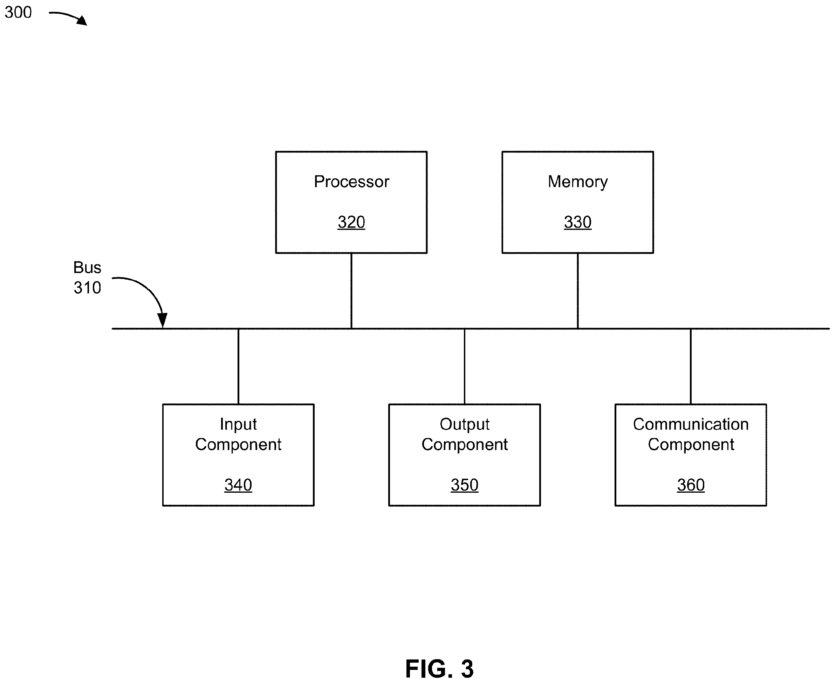

Figs. 1A through 1C are diagrams of an example 100 associated with transformation sequence management. As shown in Figs. 1A through 1C, example 100 includes a transformation sequence management system and a user device, which are described in more detail in connection with Figs. 2 and 3.

The transformation sequence management system may be configured to provide a GUI associated with transformation sequence management for display, as further described herein. As shown in Figs. 1A-1B, the user device may include a display screen, which may be configured to display the GUI (e.g., based on the transformation sequence management system providing the GUI for display to the user device). The user device may also include an input component, which may be configured to allow a user of the user device to interact (e.g., by "clicking on", selecting, and/or inputting information, among other examples) with the GUI, as further described herein.

The transformation sequence management system may provide the GUI to the user device for display. For example, the transformation sequence management system may send the GUI to the user device, which may cause the user device to display the GUI (e.g., via the display screen of the user device). The GUI may include an interface, such as a web form, for providing and obtaining information associated with a transformation data structure, as described herein. The GUI may include one or more fields in which information may be entered, such as by a user of the user device using the input component of the user device and provided to the transformation sequence management system. Such information may be referred to as "user input" or "input".

As shown in Fig. 1A, and by reference number 102, the transformation sequence management system may provide, for display (e.g., via the GUI), a first field. The first field may identify a plurality of transformation objects (e.g., a transformation object 1 through a transformation object *L,* where *L* is greater than or equal to two).

A transformation object may include and/or may indicate a computational process (e.g., a transformation function) that, when executed, causes first data, which may be referred to herein as "input data," to be programmatically altered or otherwise modified into second data, which may be referred to herein as "output data" and/or a "result of execution" of the transformation object, using one or more parameters, as described in greater detail elsewhere herein. Such a process may be referred to as executing and/or performing a transformation object on the input data to generate the output data. For example, executing a transformation object on input data may include mapping a set of values of the input data to target values, filtering the input data based on criteria associated with the transformation object, aggregating or decomposing values of the input data, and/or converting data types of the input data, among other examples.

As shown by reference number 104, the transformation sequence management system may obtain first input. The first input may indicate selection of a transformation object of the plurality of transformation objects. For example, the user may select the transformation object to perform a particular transformation on data as part of generating a configuration for an orchestrator. In some implementations, the user may interact with the GUI (e.g., via the input component of the user device) to allow the transformation sequence management system to obtain the selection of the transformation object. For example, the user may select the transformation object (e.g., by "tapping," "clicking," or otherwise engaging with the first field to select the transformation object), which may cause the transformation sequence management system to obtain the selection of the transformation object.

In some examples, the transformation sequence management system may identify the plurality of transformation objects using a data source, such as a database. For example, the transformation sequence management system may obtain data associated with the plurality of transformation objects, such as metadata, from the data source. The data may indicate the plurality of transformation objects. For example, the data may indicate respective identifiers (e.g., respective names) of the plurality of transformation objects. The transformation sequence management system may process the data to identify the plurality of transformation objects, which may allow the transformation sequence management system to identify (e.g., indicate) the plurality of transformation objects. In some examples, the data source may be updated to include additional and/or modified transformation objects. Thus, by identifying the plurality of transformation objects using the data source, the transformation sequence management system may provide an up-to-date selection of transformation objects to the user device.

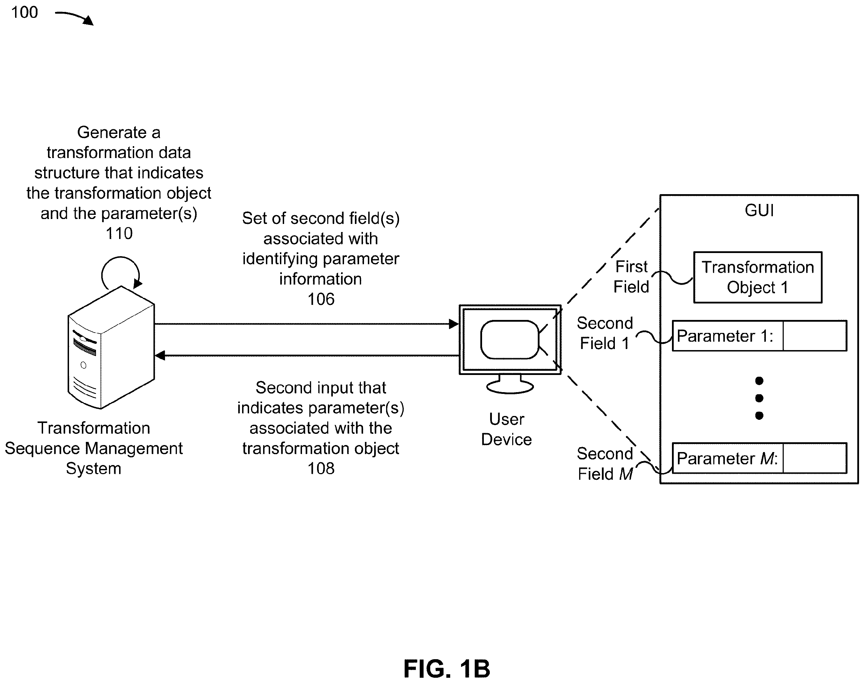

As shown in Fig. 1B, by reference number 106, the transformation sequence management system may provide a set of one or more second fields for display within the GUI. The set of one or more second fields may be associated with identifying parameter information for the selected transformation object. For example, a transformation object may be associated with one or more parameters (e.g., a parameter 1 through a parameter *M,* where *M* is greater than or equal to 1) that define or otherwise influence the behavior of the transformation object. These parameters may act as input variables and/or configurations of the transformation object and may influence how the transformation object operates on particular input data. For example, parameters of a transformation object may indicate one or more mappings that determine how a set of values of the input data correspond to target values, filtering conditions that specify which data elements of the input data should be retained or excluded, and/or other transformation rules that define operations on the input data. Additionally, parameters of a transformation object may indicate default values to be used, such as when expected values are missing from the one or more parameters. Accordingly, the particular parameter information indicated by the one or more second fields may be based on (e.g., may correspond to) the selected transformation object.

In some cases, the parameters of a transformation object may also include identifiers that provide additional context or functionality. For example, a transformation object may be associated with an identifier, such as a name. Similarly, parameters for a transformation data object may include an identifier associated with output data of the transformation object, such as an output name, that may allow a result of the transformation object to be referenced in subsequent operations.

As shown by reference number 108, the transformation sequence management system may obtain second input. The second input may indicate one or more parameters associated with the selected transformation object. In some implementations, the user may interact with the GUI (e.g., via the input component of the user device) to allow the transformation sequence management system to obtain the second input. For example, the user may select respective options (e.g., by "tapping," "clicking," or otherwise engaging with the one or more second fields to select the respective options from a set of one or more options for a parameter) and/or provide respective text input to indicate the one or more parameters, which may cause the transformation sequence management system to obtain the selection of the second input.

As shown by reference number 110, the transformation sequence management system may generate a transformation data structure. The transformation data structure may indicate the transformation object and the one or more parameters. The transformation data structure may be a data structure, such as an object in a domain specification language (e.g., JSON), that stores the transformation object and the one or more parameters. In some implementations, the transformation data structure may include a first portion (e.g., that includes one or more entries, such as one or more key-value pairs) that indicates the transformation object, such as by storing the name of the transformation object. By way of illustrative example, a first portion may be a key-value pair. A key of a first portion may include a first identifier indicating that the first portion is associated with the name of the transformation object (e.g., a string, such as "functionName"). Additionally, a value of a first portion may include a second identifier indicating the particular name of a transformation object. For example, the value of the first portion of a transformation object configured to filter a list of maps may be a string, such as "filterListOfMaps".

The transformation data structure may further include a second portion that indicates the one or more parameters, such as by storing a list of the one or more parameters. In some examples, the transformation data structure may include additional portions, such as a portion that indicates a name for a result (e.g., one or more output parameters) of execution of the transformation object, among other examples.

By including both the transformation object and the one or more associated parameters in the transformation data structure, the transformation sequence management system may enable the transformation data structure to be accurately replicated across different environments, which increases consistency and reliability within data processing pipelines. Further, by using a domain-specific language to define the transformation data structure, the transformation sequence management system may reduce the complexity of managing and executing transformation objects, which enables execution of the transformation objects, regardless of underlying codebases or algorithms.

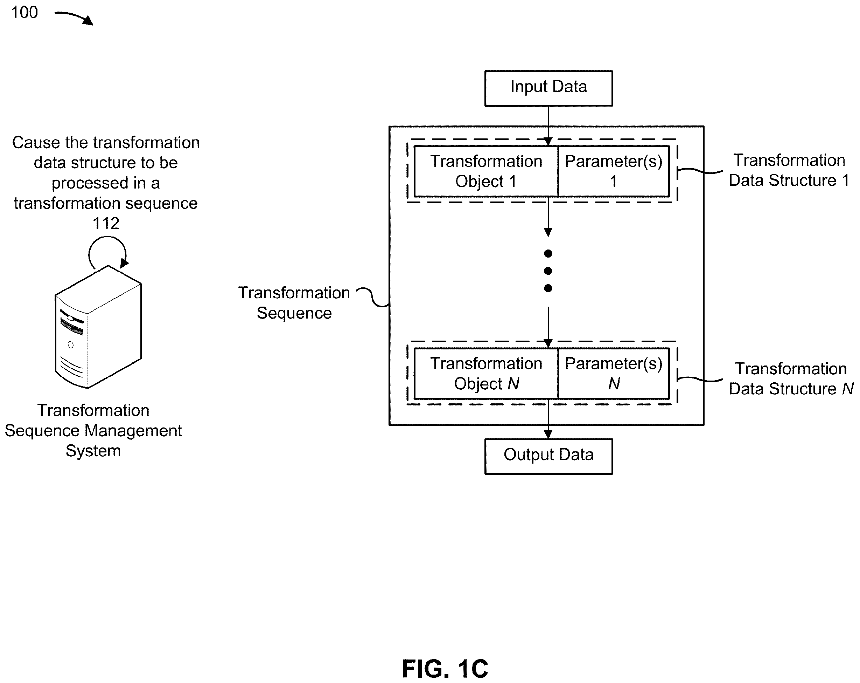

In some examples, the transformation sequence management system may add the transformation data structure to a transformation sequence. The transformation sequence may be a data structure, such as an object in a domain specification language, that indicates an order in which one or more transformation data structures are to be processed, as further described in connection with Fig. 1C and reference number 112. In some implementations, the transformation sequence may include an ordered list of transformation data structures, where the positions of transformation data structures in the list indicates the order in which the transformation data structures are to be processed. For example, the transformation sequence may include a transformation data structure 1 through a transformation data structure *N,* where *N* is greater than or equal to one. In some implementations, the transformation sequence and/or the one or more transformation data structures may indicate respective positions of the one or more transformation data structures in the transformation sequence.

In some examples, the transformation sequence management system may support adding additional transformation data structures to the transformation sequence. For example, the transformation sequence management system may provide, for display within the GUI, a third field identifying the plurality of transformation objects (e.g., in a similar manner as that described herein in relation to Fig. 1A and reference number 102). The transformation sequence management system may obtain, based on providing the third field, third input (e.g., in a similar manner as that described herein in relation to Fig. 1A and reference number 104). The third input may indicate selection of another transformation object from the plurality of transformation objects. Following the selection of the other transformation object, the transformation sequence management system may provide, for display within the GUI, a set of one or more fourth fields associated with identifying other parameter information associated with the other transformation object (e.g., in a similar manner as that described herein in relation to Fig. 1B and reference number 106). The set of one or more fourth fields may provide options or text input areas that allow the user to indicate the parameters for the other transformation object. The transformation sequence management system may obtain, based on providing the set of one or more fourth fields, fourth input that indicates one or more other parameters associated with the other transformation object (e.g., in a similar manner as that described herein in relation to Fig. 1B and reference number 108). The transformation sequence management system may generate another transformation data structure that includes the other transformation object and the one or more other associated parameters (e.g., in a similar manner as that described herein in relation to Fig. 1B and reference number 110).

In some examples, the transformation sequence management system may support adjusting the transformation sequence from a first order to a second order (e.g., a different order than the first order). Said another way, the transformation sequence management system may support modifying the order of the transformation sequence. For example, the transformation sequence management system may provide, and the user device may obtain, one or more fifth fields for display within the GUI. The user device may provide, and the transformation sequence management system may obtain, fifth input indicating that the transformation sequence is to be adjusted from the first order to the second order (e.g., indicating that the transformation sequence is to be reordered). In some implementations, the user may interact with the GUI (e.g., via the input component of the user device) to allow the transformation sequence management system to obtain the fifth input. For example, the user may indicate, via the GUI, a change to the order of the transformation sequence, such as by selecting and dragging transformation data structures to different positions within the sequence or otherwise engaging with the one or more fifth fields. Based on obtaining the fifth input, the transformation sequence management system may adjust the transformation sequence from the first order to the second order. For example, the transformation sequence management system may adjust the position of transformation data structures of the transformation sequence to indicate that the transformation sequence is to be performed in the second order. Additionally, or alternatively, the transformation sequence management system may update respective portions of transformation data structures of the transformation sequence, such as respective ordinal values, to indicate that the transformation sequence is to be performed in the second order.

In some examples, the transformation sequence management system may support removing one or more transformation data structures from the transformation sequence. For example, the transformation sequence management system may provide, and the user device may obtain, one or more sixth fields for display within the GUI. The user device may provide, and the transformation sequence management system may obtain, sixth input indicating that a particular transformation data structure is to be removed. In some implementations, the user may interact with the GUI (e.g., via the input component of the user device) to allow the transformation sequence management system to obtain the sixth input. For example, the user may indicate, via the GUI, the particular transformation data structure, such as by "tapping," "clicking," or otherwise engaging with the one or more sixth fields to identify the particular transformation data structure. Based on obtaining the sixth input, the transformation sequence management system may remove the particular transformation data structure from the transformation sequence. In some examples, the transformation sequence management system may update respective portions of remaining transformation data structures of the transformation sequence, such as respective ordinal values, to indicate that the transformation sequence has been modified by the removal of the particular transformation object.

In some examples, the transformation sequence management system may support updating the one or more parameters of a particular transformation data structure. For example, the transformation sequence management system may provide, and the user device may obtain, one or more seventh fields for display within the GUI. The user device may provide, and the transformation sequence management system may obtain, seventh input indicating that the one or more parameters are to be updated. In some implementations, the user may interact with the GUI (e.g., via the input component of the user device) to allow the transformation sequence management system to obtain the seventh input. For example, the user may indicate, via the GUI, one or more updated parameters, such as by selecting updated parameters, providing a text input specifying updated parameters, or otherwise identifying the updated parameters. Based on obtaining the seventh input, the transformation sequence management system may update the parameters of the particular transformation data structure, such as by associating the updated parameters with the particular transformation data structure.

As shown in Fig. 1C, and by reference number 112, the transformation sequence management system may cause the transformation data structure to be processed in accordance with the transformation sequence. For example, the transformation sequence management system and/or the user device may cause the transformation data structure to be processed in accordance with performance of the transformation sequence, as further described herein.

Performing a transformation sequence may include processing the one or more transformation data structures of the transformation sequence in the order indicated by the transformation sequence. Processing a particular transformation data structure of the transformation sequence may include executing a transformation object that is indicated by the particular transformation data structure based on one or more parameters associated with the transformation object that are also indicated by the particular transformation data structure. Said another way, causing a transformation data structure to be processed results in execution (e.g., may cause execution) of a transformation object associated with the transformation data structure, such as based on one or more parameters associated with the transformation object and the transformation data structure.

In an illustrative example, a transformation sequence may include an ordered list of transformation data structures that includes a transformation data structure followed by another transformation data structure. In such an example, performing the transformation sequence may include processing the transformation data structure by executing a transformation object of the transformation data structure on input data using parameter(s) of the transformation data structure. The result of execution of the transformation object (e.g., the output of the transformation object) may be assigned to one or more output parameters of the transformation data structure. Performing the transformation sequence may further include processing, after processing the transformation data structure, the other transformation data structure by executing the other transformation object on the one or more output parameters of the transformation data structure using parameter(s) of the other transformation data structure. Executing the other transformation object may assign the one or more output parameters to one or more input parameters of the other transformation object. Said another way, executing the other transformation object may associate the one or more output parameters with input data of the other transformation object. For example, the result of the transformation object may be used as input data to the other transformation data structure. The result of executing the other transformation object may be assigned to one or more output parameters of the other transformation data structure.

In some implementations, the other transformation data structure may be the last transformation data structure in the order of the transformation sequence. Thus, a result of the transformation sequence may be the one or more output parameters of the other transformation data structure. Although an example transformation sequence of two transformation data structures is used, techniques described herein may be applied to transformation sequences of any number of transformation data structures, in which the output parameter(s) of a particular transformation data structure are used as input data of a next transformation data structure in the transformation sequence.

Output parameter(s) of a particular transformation data structure may be accessible to additional transformation data structures of the transformation sequence that do not directly proceed the particular transformation data structure (in the order of the transformation sequence). For example, the output parameter of the particular transformation data structure may be stored within a localized scope of the domain specification language. Other transformation data structures (e.g., transformation data structures subsequent to the particular transformation data structure) may access the output parameters of the particular transformation data structure, such as by referencing the output name of the particular transformation data structure.

As indicated above, Figs. 1A through 1C are provided as examples. Other examples may differ from what is described with regard to Figs. 1A through 1C.

Fig. 2 is a diagram of an example environment 200 in which systems and/or methods described herein may be implemented. As shown in Fig. 2, environment 200 may include a transformation sequence management system 201, which may include one or more elements of and/or may execute within a cloud computing system 202. The cloud computing system 202 may include one or more elements 203-212, as described in more detail below. As further shown in Fig. 2, environment 200 may include a network 220 and/or a user device 230. Devices and/or elements of environment 200 may interconnect via wired connections and/or wireless connections.

The cloud computing system 202 may include computing hardware 203, a resource management component 204, a host operating system (OS) 205, and/or one or more virtual computing systems 206. The cloud computing system 202 may execute on, for example, an Amazon Web Services platform, a Microsoft Azure platform, or a Snowflake platform. The resource management component 204 may perform virtualization (e.g., abstraction) of computing hardware 203 to create the one or more virtual computing systems 206. Using virtualization, the resource management component 204 enables a single computing device (e.g., a computer or a server) to operate like multiple computing devices, such as by creating multiple isolated virtual computing systems 206 from computing hardware 203 of the single computing device. In this way, computing hardware 203 can operate more efficiently, with lower power consumption, higher reliability, higher availability, higher utilization, greater flexibility, and lower cost than using separate computing devices.

The computing hardware 203 may include hardware and corresponding resources from one or more computing devices. For example, computing hardware 203 may include hardware from a single computing device (e.g., a single server) or from multiple computing devices (e.g., multiple servers), such as multiple computing devices in one or more data centers. As shown, computing hardware 203 may include one or more processors 207, one or more memories 208, and/or one or more networking components 209. Examples of a processor, a memory, and a networking component (e.g., a communication component) are described elsewhere herein.

The resource management component 204 may include a virtualization application (e.g., executing on hardware, such as computing hardware 203) capable of virtualizing computing hardware 203 to start, stop, and/or manage one or more virtual computing systems 206. For example, the resource management component 204 may include a hypervisor (e.g., a bare-metal or Type 1 hypervisor, a hosted or Type 2 hypervisor, or another type of hypervisor) or a virtual machine monitor, such as when the virtual computing systems 206 are virtual machines 210. Additionally, or alternatively, the resource management component 204 may include a container manager, such as when the virtual computing systems 206 are containers 211. In some implementations, the resource management component 204 executes within and/or in coordination with a host operating system 205.

A virtual computing system 206 may include a virtual environment that enables cloud-based execution of operations and/or processes described herein using computing hardware 203. As shown, a virtual computing system 206 may include a virtual machine 210, a container 211, or a hybrid environment 212 that includes a virtual machine and a container, among other examples. A virtual computing system 206 may execute one or more applications using a file system that includes binary files, software libraries, and/or other resources required to execute applications on a guest operating system (e.g., within the virtual computing system 206) or the host operating system 205.

Although the transformation sequence management system 201 may include one or more elements 203-212 of the cloud computing system 202, may execute within the cloud computing system 202, and/or may be hosted within the cloud computing system 202, in some implementations, the transformation sequence management system 201 may not be cloud-based (e.g., may be implemented outside of a cloud computing system) or may be partially cloud-based. For example, the transformation sequence management system 201 may include one or more devices that are not part of the cloud computing system 202, such as device 300 of Fig. 3, which may include a standalone server or another type of computing device. The transformation sequence management system 201 may perform one or more operations and/or processes described in more detail elsewhere herein.

The network 220 may include one or more wired and/or wireless networks. For example, the network 220 may include a cellular network, a public land mobile network (PLMN), a local area network (LAN), a wide area network (WAN), a private network, the Internet, and/or a combination of these or other types of networks. The network 220 enables communication among the devices of the environment 200.

The user device 230 may include one or more devices capable of receiving, generating, storing, processing, and/or providing information associated with transformation sequence management, as described elsewhere herein. The user device 230 may include a communication device and/or a computing device. For example, the user device 230 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

Fig. 3 is a diagram of example components of a device 300 associated with transformation sequence management. The device 300 may correspond to the transformation sequence management system 201, the computing hardware 203, and/or the user device 230. In some implementations, the transformation sequence management system 201, the computing hardware 203, and/or the user device 230 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touchscreen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

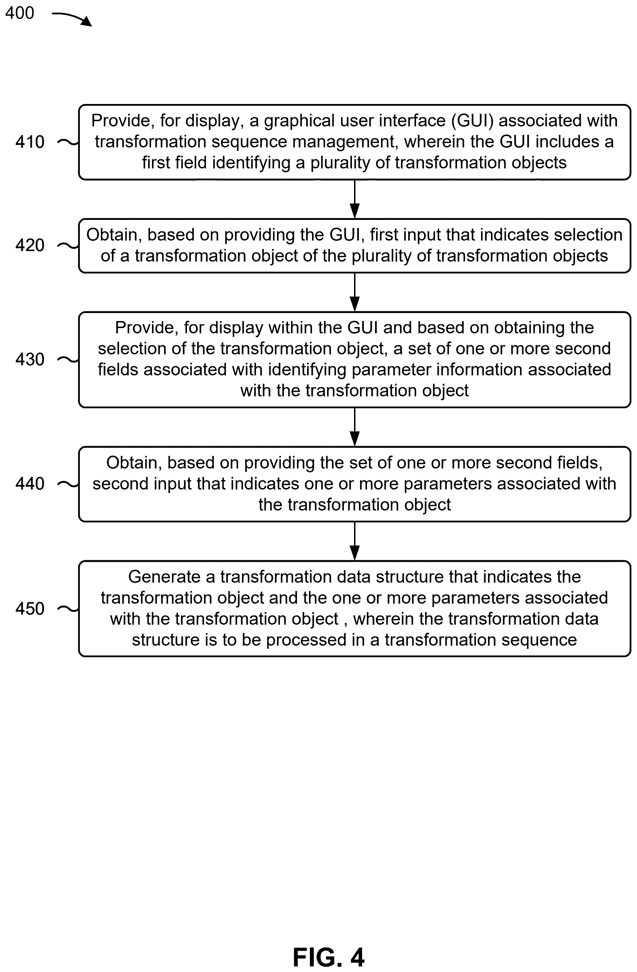

Fig. 4 is a flowchart of an example process 400 associated with transformation sequence management. In some implementations, one or more process blocks of Fig. 4 may be performed by the transformation sequence management system 201. In some implementations, one or more process blocks of Fig. 4 may be performed by another device or a group of devices separate from or including the transformation sequence management system 201, such as the network 220 and/or the user device 230. Additionally, or alternatively, one or more process blocks of Fig. 4 may be performed by one or more components of the device 300, such as processor 320, memory 330, input component 340, output component 350, and/or communication component 360.

As shown in Fig. 4, process 400 may include providing, for display, a GUI associated with transformation sequence management, wherein the GUI includes a first field identifying a plurality of transformation objects (block 410). For example, the transformation sequence management system 201 (e.g., using processor 320 and/or memory 330) may provide, for display, a GUI associated with transformation sequence management, where the GUI includes a first field identifying a plurality of transformation objects, as described above in connection with reference number 102 of Fig. 1A. As an example, the first field may display or otherwise indicate the plurality of transformation objects to enable a user to select a particular transformation object.

As further shown in Fig. 4, process 400 may include obtaining, based on providing the GUI, first input that indicates selection of a transformation object of the plurality of transformation objects (block 420). For example, the transformation sequence management system 201 (e.g., using processor 320 and/or memory 330) may obtain, based on providing the GUI, first input that indicates selection of a transformation object of the plurality of transformation objects, as described above in connection with reference number 104 of Fig. 1A. As an example, the user may interact with the first field to select a particular transformation object.

As further shown in Fig. 4, process 400 may include providing, for display within the GUI and based on obtaining the selection of the transformation object, a set of one or more second fields associated with identifying parameter information associated with the transformation object (block 430). For example, the transformation sequence management system 201 (e.g., using processor 320 and/or memory 330) may provide, for display within the GUI and based on obtaining the selection of the transformation object, a set of one or more second fields associated with identifying parameter information associated with the transformation object, as described above in connection with reference number 106 of Fig. 1B. As an example, the transformation sequence management system may identify parameter information for the selected transformation object and provide the one or more second fields to obtain user input defining one or more parameters of the selected transformation object.

As further shown in Fig. 4, process 400 may include obtaining, based on providing the set of one or more second fields, second input that indicates one or more parameters associated with the transformation object (block 440). For example, the transformation sequence management system 201 (e.g., using processor 320 and/or memory 330) may obtain, based on providing the set of one or more second fields, second input that indicates one or more parameters associated with the transformation object, as described above in connection with reference number 108 of Fig. 1B. As an example, the user may interact with the one or more second fields to define the one or more parameters.

As further shown in Fig. 4, process 400 may include generating a transformation data structure that indicates the transformation object and the one or more parameters associated with the transformation object, wherein the transformation data structure is to be executed in a transformation sequence (block 450). For example, the transformation sequence management system 201 (e.g., using processor 320 and/or memory 330) may generate a transformation data structure that indicates the transformation object and the one or more parameters associated with the transformation object, where the transformation data structure is to be executed in a transformation sequence, as described above in connection with reference number 110 of Fig. 1B. As an example, the transformation sequence management system may define the transformation data structure as an object in a domain specification language.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel. The process 400 is an example of one process that may be performed by one or more devices described herein. These one or more devices may perform one or more other processes based on operations described herein, such as the operations described in connection with Figs. 1A through 1C. Moreover, while the process 400 has been described in relation to the devices and components of the preceding figures, the process 400 can be performed using alternative, additional, or fewer devices and/or components. Thus, the process 400 is not limited to being performed with the example devices, components, hardware, and software explicitly enumerated in the preceding figures.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

Various examples are set out in the following numbered paragraphs (NPs).
NP 1. A system for transformation sequence management, the system comprising: one or more memories; and one or more processors, communicatively coupled to the one or more memories, configured to: provide, for display, a graphical user interface (GUI) associated with transformation sequence management, wherein the GUI includes a first field identifying a plurality of transformation objects; obtain, based on providing the GUI, first input that indicates selection of a transformation object of the plurality of transformation objects; provide, for display within the GUI and based on obtaining the selection of the transformation object, a set of one or more second fields associated with identifying parameter information associated with the transformation object; obtain, based on providing the set of one or more second fields, second input that indicates one or more parameters associated with the transformation object; and generate a transformation data structure that indicates the transformation object and the one or more parameters associated with the transformation object, wherein the transformation data structure is to be processed in a transformation sequence.
NP 2. The system of NP 1, wherein the one or more processors are further configured to: cause the transformation data structure to be processed in accordance with performance of the transformation sequence, wherein causing the transformation data structure to be processed results in execution of the transformation object based on the one or more parameters.
NP 3. The system of NP 1, wherein the one or more processors are further configured to: provide, for display within the GUI and based on generating the transformation data structure, a third field identifying the plurality of transformation objects; obtain, based on providing the third field, third input that indicates selection of another transformation object of the plurality of transformation objects; provide, for display within the GUI and based on obtaining the selection of the other transformation object, a set of one or more fourth fields associated with identifying other parameter information associated with the other transformation object; obtain, based on providing the set of one or more fourth fields, fourth input that indicates one or more other parameters associated with the other transformation object; and generate another transformation data structure that indicates the other transformation object and the one or more other parameters associated with the other transformation object, wherein the other transformation data structure is to be processed after the transformation data structure is processed in the transformation sequence.
NP 4. The system of NP 3, wherein the one or more processors are further configured to: cause the transformation data structure to be processed in accordance with performance of the transformation sequence, wherein causing the transformation data structure to be processed results in execution of the transformation object based on the one or more parameters; and cause, after the transformation data structure is processed, the other transformation data structure to be processed in accordance with performance of the transformation sequence, wherein causing the other transformation data structure to be processed results in execution of the other transformation object based on the one or more other parameters.
NP 5. The system of NP 4, wherein: executing the transformation object assigns a result of execution of the transformation object to an output parameter of the one or more parameters of the transformation object, and executing the other transformation object associates the output parameter with input data of the other transformation object.
NP 6. The system of NP 3, wherein the one or more processors are further configured to: obtain fifth input indicating that the transformation sequence is to be reordered; and reorder the transformation sequence, based on the fifth input, to indicate that the transformation data structure is to be processed after the other transformation data structure.
NP 7. The system of NP 3, wherein the one or more processors are further configured to: obtain fifth input indicating that the other transformation data structure is to be removed from the transformation sequence; and remove, based on the fifth input, the other transformation data structure from the transformation sequence.
NP 8. The system of NP 1, wherein the one or more processors are further configured to: obtain third input indicating one or more updated parameters associated with the transformation object; and update the transformation data structure to indicate the one or more updated parameters.
NP 9. The system of NP 1, wherein the one or more processors, to provide the GUI, are configured to: obtain, from a data source, metadata indicating the plurality of transformation objects; and process the metadata to cause the first field to identify the plurality of transformation objects.
NP 10. A non-transitory computer-readable medium storing a set of instructions, the set of instructions comprising: one or more instructions that, when executed by one or more processors of a system, cause the system to: obtain, based on providing a graphical user interface (GUI) that includes a first field identifying a plurality of transformation objects, first input that indicates selection of a transformation object of the plurality of transformation objects; provide, for display within the GUI and based on obtaining the selection of the transformation object, a set of one or more second fields associated with identifying parameter information associated with the transformation object; obtain, based on providing the set of one or more second fields, second input that indicates one or more parameters associated with the transformation object; and generate a transformation data structure that indicates the transformation object and the one or more parameters associated with the transformation object, wherein the transformation data structure is to be processed in a transformation sequence.
NP 11. The non-transitory computer-readable medium of NP 10, wherein the one or more instructions further cause the system to: cause the transformation data structure to be processed in accordance with performance of the transformation sequence, wherein causing the transformation data structure to be processed results in execution of the transformation object based on the one or more parameters.
NP 12. The non-transitory computer-readable medium of NP 10, wherein the one or more instructions further cause the system to: provide, for display within the GUI, a third field identifying the plurality of transformation objects; obtain, based on providing the third field, third input that indicates selection of another transformation object of the plurality of transformation objects; provide, for display within the GUI and based on obtaining the selection of the other transformation object, a set of one or more fourth fields associated with identifying other parameter information associated with the other transformation object; obtain, based on providing the set of one or more fourth fields, fourth input that indicates one or more other parameters associated with the other transformation object; and generate another transformation data structure that indicates the other transformation object and the one or more other parameters associated with the other transformation object, wherein the other transformation data structure and the transformation data structure are to be processed in an order in the transformation sequence.
NP 13. The non-transitory computer-readable medium of NP 12, wherein the one or more instructions further cause the system to: cause the transformation data structure to be processed in accordance with performance of the transformation sequence, wherein causing the transformation data structure to be processed results in execution of the transformation object based on the one or more parameters; and cause the other transformation data structure to be processed in accordance with performance of the transformation sequence, wherein causing the other transformation data structure to be processed results in execution of the other transformation object based on the one or more other parameters.
NP 14. The non-transitory computer-readable medium of NP 13, wherein: execution of a first transformation object, of the transformation object and the other transformation object, assigns a result of execution of the first transformation object to an output parameter, and execution of a second transformation object, of the transformation object and the other transformation object, associates the output parameter with input data of the second transformation object.
NP 15. The non-transitory computer-readable medium of NP 12, wherein the one or more instructions further cause the system to: obtain fifth input indicating that the transformation sequence is to be reordered; and reorder the transformation sequence, based on the fifth input, to indicate that the other transformation data structure and the transformation data structure are to be processed in a different order.
NP 16. The non-transitory computer-readable medium of NP 12, wherein the one or more instructions further cause the system to: obtain fifth input indicating that a particular transformation data structure, of the transformation data structure and the other transformation data structure, is to be removed from the transformation sequence; and remove, based on the fifth input, the particular transformation data structure from the transformation sequence.
NP 17. The non-transitory computer-readable medium of NP 12, wherein the one or more instructions further cause the system to: obtain third input indicating one or more updated parameters associated with the transformation object; and update the transformation data structure to indicate the one or more updated parameters.
NP 18. The non-transitory computer-readable medium of NP 10, wherein, to provide the GUI, the one or more instructions further cause the system to: obtain, from a data source, metadata indicating the plurality of transformation objects; and process the metadata to cause the first field to identify the plurality of transformation objects.
NP 19. A method, comprising: obtaining, by a system and based on a graphical user interface (GUI) that includes a first field identifying a plurality of transformation objects, first input that indicates selection of a transformation object of the plurality of transformation objects; obtaining, by the system and based on a set of one or more second fields of the GUI that are associated with identifying parameter information associated with the transformation object, second input that indicates one or more parameters associated with the transformation object; and generating, by the system, a transformation data structure, to be processed in a transformation sequence, that indicates the transformation object and the one or more parameters associated with the transformation object.
NP 20. The method of NP 19, further comprising: causing the transformation data structure to be processed, in accordance with performance of the transformation sequence, to cause execution of the transformation object based on the one or more parameters.

## Claims

1. A system for transformation sequence management, the system comprising:
one or more memories; and
one or more processors, communicatively coupled to the one or more memories, configured to:
provide, for display, a graphical user interface (GUI) associated with transformation sequence management,
wherein the GUI includes a first field identifying a plurality of transformation objects;
obtain, based on providing the GUI, first input that indicates selection of a transformation object of the plurality of transformation objects;
provide, for display within the GUI and based on obtaining the selection of the transformation object, a set of one or more second fields associated with identifying parameter information associated with the transformation object;
obtain, based on providing the set of one or more second fields, second input that indicates one or more parameters associated with the transformation object; and
generate a transformation data structure that indicates the transformation object and the one or more parameters associated with the transformation object,
wherein the transformation data structure is to be processed in a transformation sequence.

2. The system of claim 1, wherein the one or more processors are further configured to:
cause the transformation data structure to be processed in accordance with performance of the transformation sequence,
wherein causing the transformation data structure to be processed results in execution of the transformation object based on the one or more parameters.

3. The system of claim 1 or 2, wherein the one or more processors are further configured to:
provide, for display within the GUI and based on generating the transformation data structure, a third field identifying the plurality of transformation objects;
obtain, based on providing the third field, third input that indicates selection of another transformation object of the plurality of transformation objects;
provide, for display within the GUI and based on obtaining the selection of the other transformation object, a set of one or more fourth fields associated with identifying other parameter information associated with the other transformation object;
obtain, based on providing the set of one or more fourth fields, fourth input that indicates one or more other parameters associated with the other transformation object; and
generate another transformation data structure that indicates the other transformation object and the one or more other parameters associated with the other transformation object,
wherein the other transformation data structure is to be processed after the transformation data structure is processed in the transformation sequence,
optionally, wherein the one or more processors are further configured to:
cause the transformation data structure to be processed in accordance with performance of the transformation sequence,
wherein causing the transformation data structure to be processed results in execution of the transformation object based on the one or more parameters; and
cause, after the transformation data structure is processed, the other transformation data structure to be processed in accordance with performance of the transformation sequence,
wherein causing the other transformation data structure to be processed results in execution of the other transformation object based on the one or more other parameters, further optionally, wherein:
executing the transformation object assigns a result of execution of the transformation object to an output parameter of the one or more parameters of the transformation object, and
executing the other transformation object associates the output parameter with input data of the other transformation object.

4. The system of claim 3, wherein the one or more processors are further configured to:
(a)obtain fifth input indicating that the transformation sequence is to be reordered, and reorder the transformation sequence, based on the fifth input, to indicate that the transformation data structure is to be processed after the other transformation data structure, and/or
(b)obtain fifth input indicating that the other transformation data structure is to be removed from the transformation sequence, and remove, based on the fifth input, the other transformation data structure from the transformation sequence.

5. The system of any preceding claim, wherein the one or more processors are further configured to:
obtain third input indicating one or more updated parameters associated with the transformation object; and
update the transformation data structure to indicate the one or more updated parameters.

6. The system of any preceding claim, wherein the one or more processors, to provide the GUI, are configured to:
obtain, from a data source, metadata indicating the plurality of transformation objects; and
process the metadata to cause the first field to identify the plurality of transformation objects.

7. A non-transitory computer-readable medium storing a set of instructions, the set of instructions comprising:
one or more instructions that, when executed by one or more processors of a system, cause the system to:
obtain, based on providing a graphical user interface (GUI) that includes a first field identifying a plurality of transformation objects, first input that indicates selection of a transformation object of the plurality of transformation objects;
provide, for display within the GUI and based on obtaining the selection of the transformation object, a set of one or more second fields associated with identifying parameter information associated with the transformation object;
obtain, based on providing the set of one or more second fields, second input that indicates one or more parameters associated with the transformation object; and
generate a transformation data structure that indicates the transformation object and the one or more parameters associated with the transformation object,
wherein the transformation data structure is to be processed in a transformation sequence.

8. The non-transitory computer-readable medium of claim 7, wherein the one or more instructions further cause the system to:
cause the transformation data structure to be processed in accordance with performance of the transformation sequence,
wherein causing the transformation data structure to be processed results in execution of the transformation object based on the one or more parameters.

9. The non-transitory computer-readable medium of claim 7 or 8, wherein the one or more instructions further cause the system to:
provide, for display within the GUI, a third field identifying the plurality of transformation objects;
obtain, based on providing the third field, third input that indicates selection of another transformation object of the plurality of transformation objects;
provide, for display within the GUI and based on obtaining the selection of the other transformation object, a set of one or more fourth fields associated with identifying other parameter information associated with the other transformation object;
obtain, based on providing the set of one or more fourth fields, fourth input that indicates one or more other parameters associated with the other transformation object; and
generate another transformation data structure that indicates the other transformation object and the one or more other parameters associated with the other transformation object,
wherein the other transformation data structure and the transformation data structure are to be processed in an order in the transformation sequence,
optionally wherein the one or more instructions further cause the system to:
cause the transformation data structure to be processed in accordance with performance of the transformation sequence,
wherein causing the transformation data structure to be processed results in execution of the transformation object based on the one or more parameters; and
cause the other transformation data structure to be processed in accordance with performance of the transformation sequence,
wherein causing the other transformation data structure to be processed results in execution of the other transformation object based on the one or more other parameters, further optionally wherein:
execution of a first transformation object, of the transformation object and the other transformation object, assigns a result of execution of the first transformation object to an output parameter, and
execution of a second transformation object, of the transformation object and the other transformation object, associates the output parameter with input data of the second transformation object.

10. The non-transitory computer-readable medium of claim 9, wherein the one or more instructions further cause the system to:
obtain fifth input indicating that the transformation sequence is to be reordered; and
reorder the transformation sequence, based on the fifth input, to indicate that the other transformation data structure and the transformation data structure are to be processed in a different order.

11. The non-transitory computer-readable medium of any one of claims 9-10, wherein the one or more instructions further cause the system to:
obtain fifth input indicating that a particular transformation data structure, of the transformation data structure and the other transformation data structure, is to be removed from the transformation sequence; and
remove, based on the fifth input, the particular transformation data structure from the transformation sequence.

12. The non-transitory computer-readable medium of any one of claims 9-11, wherein the one or more instructions further cause the system to:
obtain third input indicating one or more updated parameters associated with the transformation object; and
update the transformation data structure to indicate the one or more updated parameters.

13. The non-transitory computer-readable medium of any one of claims 7-12, wherein, to provide the GUI, the one or more instructions further cause the system to:
obtain, from a data source, metadata indicating the plurality of transformation objects; and
process the metadata to cause the first field to identify the plurality of transformation objects.

14. A method, comprising:
obtaining, by a system and based on a graphical user interface (GUI) that includes a first field identifying a plurality of transformation objects, first input that indicates selection of a transformation object of the plurality of transformation objects;
obtaining, by the system and based on a set of one or more second fields of the GUI that are associated with identifying parameter information associated with the transformation object, second input that indicates one or more parameters associated with the transformation object; and
generating, by the system, a transformation data structure, to be processed in a transformation sequence, that indicates the transformation object and the one or more parameters associated with the transformation object.

15. The method of claim 14, further comprising:
causing the transformation data structure to be processed, in accordance with performance of the transformation sequence, to cause execution of the transformation object based on the one or more parameters.
